# EUROPEAN PATENT SPECIFICATION

(11) **EP 2 888 181 B1**
(45) Date of publication and mention of the grant of the patent: **08.03.2017**
(21) Application number: 13750014.6
(22) Date of filing: 08.08.2013
(51) Int. Cl.: B65D 85/804, G06K 19/077

(54) **CAPSULE ASSEMBLIES WITH DATA STORAGE AND COMMUNICATION MEANS**
KAPSELANORDNUNGEN MIT DATENSPEICHERUNG UND KOMMUNIKATIONSMITTEL
ENSEMBLES CAPSULE À STOCKAGE DE DONNÉES ET MOYENS DE COMMUNICATION

(30) Priority: 22.08.2012 EP 12181292; 22.08.2012 EP 12181428
(43) Date of publication of application: 01.07.2015
(73) Proprietor: Nestec S.A., 1800 Vevey (CH)
(72) Inventor: JARISCH, Christian, CH-1095 Lutry (CH)
(74) Representative: Sacroug, Olivier
(86) International application number: PCT/EP2013/066609
(87) International publication number: WO 2014/029628

(56) References cited:
- EP-A1- 1 890 271
- EP-A1- 2 071 496
- EP-A1- 2 410 604
- DE-A1-102010 044 251
- DE-U1-202010 009 287
- FR-A1- 2 912 124
- GB-A- 2 371 263
- US-A1- 2003 235 027
- US-A1- 2007 279 313
- US-A1- 2008 187 638
- US-A1- 2010 052 859
- US-A1- 2011 110 180

## Description

### Field of the invention

The invention pertains to the field of capsules containing an ingredient for preparing a beverage, adapted to cooperate with beverage preparation machines having a brewing chamber that can be opened and closed for inserting the capsule into the chamber and/or removal of a used capsule therefrom. More particularly, the invention relates to a capsule with data storage and communication means, providing a convenient and adaptable solution to store and transfer information to external devices.

For the purpose of the present description, a "beverage" is meant to include any human-consumable liquid substance, such as coffee, tea, hot or cold chocolate, milk, soup, baby food or the like. A "capsule" is meant to include any pre-portioned beverage ingredient or combination of ingredients (hereafter called "ingredient") within an enclosing packaging of any suitable material such as plastic, aluminium, a recyclable and/or bio-degradable material and combinations thereof, including a soft pod or a rigid cartridge containing the ingredient.

### Technical background

Certain beverage preparation machines use capsules containing an ingredient to be extracted or to be dissolved and/or ingredient that is stored and dosed automatically in the machine or else is added at the time of preparation of the drink. Some beverage machines possess filling means that include a pump for liquid, usually water, which pumps the liquid from a source of water that is cold or indeed heated through heating means, e.g. a thermoblock or the like.

Especially in the field of coffee preparation, machines have been widely developed in which a capsule containing a beverage ingredient is inserted in a brewing device. The brewing device is tightly closed about the capsule, water is injected at the first face of the capsule, the beverage is produced in the closed volume of the capsule and a brewed beverage can be drained from a second face of the capsule and collected into a receptacle such as a cup or glass.

It is known to associate a radio frequency (RF) identifier to the capsule for the purpose of recognizing the capsule which is inserted in the device such as by a reader. Such identification allows changing particular operations, in the beverage producing device, in response to the detection of the identifier. For instance, brewing operations can be modified accordingly for adapting them to the type of capsule detected. For instance, brewing parameters, such as water temperature, the beverage volume or others, can be changed.

WO02/28241 relates to an encoded coffee packet including a machine interpretable feature on the capsule, for instance, electromagnetically detectable, e.g., a magnetic data storage medium.

FR2912124 relates to a portioned package for preparation of a beverage comprising two flexible walls connected by their seam and comprising an RFID tag for contactless reading which is positioned in a reinforced peripheral portion at the seam of the package.

EP1890271A1 relates to a method of controlling the dispensing of an infusion product with a container for a product dose and an RFID tag associated to a respective number of containers.

The prior art solutions typically contemplate the association of a contactless identifier such as a radio-frequency tag with the beverage portioned package. The package generally forms the support for the tag and can be produced during manufacturing of the package.

Certain identifiers placed on the package can be deteriorated, removed or modified. Certain identifiers are particularly sensitive to pressure or bending and may be easily broken. In particular, the portion package is submitted to relatively high forces during mechanical and/or hydraulic closing of the beverage brewing unit around or onto the package. As a result, the identifier can be damaged and is no longer readable and the capsule is irremediably wasted.

Capsule with identifiers are for instance known from DE 102010044251 A1, EP 1890271 A1, US 2011/0110180 A1, US 2008/0187638 A1.

### Summary of the invention

An object of the invention is to embed storage and communication means, in a capsule assembly, compatible with food-safety requirements. Another object is to provide a reliable solution for receiving and transmitting information. Another object is to provide a solution less prone to damage or deterioration, in particular during handling of the capsule assembly. Another object is to provide a cost efficient solution, in particular in term of assembly and production costs.

One or more of these objects are met by a capsule and a machine according to the
independent claim(s). The dependent claims further provide solutions to these objects and/or additional benefits.

More particularly, according to a first aspect, the invention relates to a capsule as disclosed in claim 1.

The capsule may be provided with a seal at its outer face, the communication assembly being disposed in the sealing member or between the sealing member and the outer face of the capsule.

For example, the integrated circuit may comprise a first contact pad and a second contact pad, the first and the second contact pads being disposed relatively to each other on opposite sides of the integrated circuit, the contact pads being used to couple the integrated circuit to the antenna.

In an embodiment, the contact pads are spaced apart of each other sensibly by 75 µm.

In an embodiment, the integrated circuit is disposed into a support comprising a layer of polymer and covered by an insulation layer.

In particular, the communication assembly is adapted to be capacitively coupled to an external reader, using a low frequency, an High Frequency or an Ultra High Frequency communication technology.

According to a second aspect, the invention relates to a capsule according to claim 7.

In an embodiment, the integrated circuit comprises a first contact pad and a second contact pad, the first and the second contact pads being disposed relatively to each other on opposite sides of the integrated circuit, the contact pads being used to couple the integrated circuit to the peripheral rim of a capsule and to the membrane. In particular, the capsule the contact pads may be spaced apart of each other sensibly by 75 µm.

In an embodiment, the integrated circuit is mounted on the inner surface of the capsule without using an inlay.

In particular, the communication assembly is adapted to be capacitively coupled to an external reader, using a low frequency (LF) communication technology.

According to the first aspect of the invention, or according to the second aspect of the invention, the communication assembly may comprise a RFID interface. The communication assembly may be adapted to provide information related to preferences of a user, said information comprising one or any combination of the following information: user's preferred volume of beverage to prepare with the capsule, user's preferred temperature of beverage to prepare with the capsule, user's preferred pressure used for preparing a beverage with the capsule, user's preferred recipe used for preparing a beverage with the capsule, user's preferred ingredients used for preparing a beverage with the capsule, user's preferred additional ingredients used for preparing a beverage with the capsule, user's preferred pre-wetting setup used for preparing a beverage with the capsule. The communication assembly may be adapted to provide information related to the capsule, said information comprising one or any combination of the following information: unique identifier, type of capsule, date of production, batch number, type of ingredient included in the capsule, identifier, serial number.

According to a third aspect, the invention relates to a beverage preparation system as disclosed in claim 15.

### Brief description of the drawings

The invention will now be described with reference to the schematic drawings, wherein:
- Figure 1 is a cross section of a capsule adapted to be used by a beverage machine to prepare a beverage;
- Figure 2a, and 2b are schema of an embodiment of a capsule according to the invention;
- Figure 3 is a schema of another embodiment of a capsule according to the invention;
- Figure 4 are schema of another embodiment of a capsule.

### Detailed description of the invention

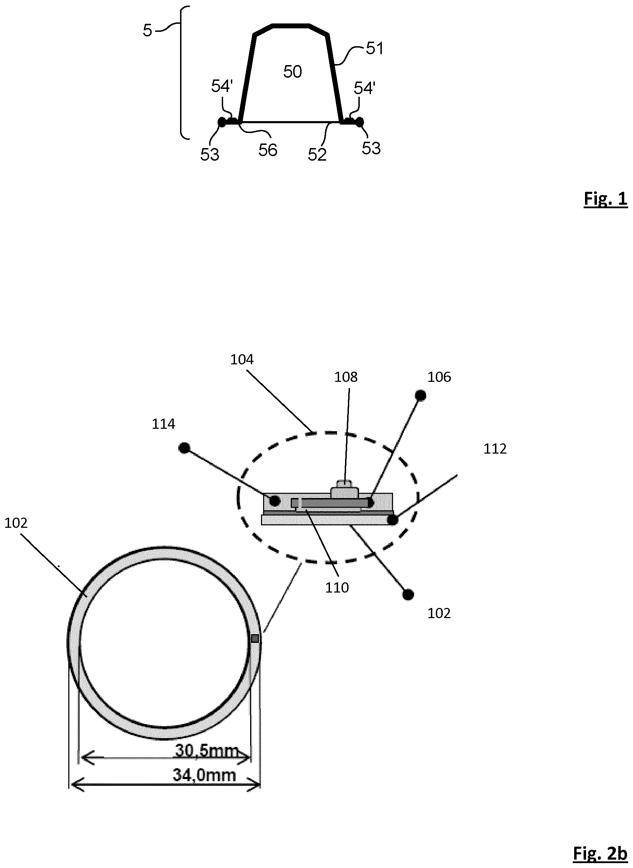

The brewing unit is represented in the opened position on figure 1. The brewing unit allows the preparation of a beverage from a capsule **5** containing at least one ingredient, e.g. ground coffee or tea or chocolate.

Referring to figure 1, there is shown therein a schema of a capsule **5** containing at least one ingredient, e.g. ground coffee or tea or chocolate. The capsule 5 has a generally cup-shaped body **51** and a covering membrane **52.** Membrane is assembled to cup along a peripheral rim **54** of cup. The rim may be covered with a seal **54',** e.g. made of elastomeric material. Furthermore, the capsule in particular the rim and/or the membrane may bear a ring or toroid **53,** e.g. for assisting manufacturing and/or handling of the capsule. Such capsule forms a packaging for containing an ingredient **50,** e.g. ground coffee, of a beverage to be prepared with the beverage preparation machine. In an embodiment, the capsule forms a gastight packaging, e.g. made of aluminium or an aluminium-alloy. Alternatively, the capsule may be more or less pervious, e.g. perforated and/or made of organic, in particular plastic material, e.g. biodegradable material. The capsule's cup and/or the capsule's membrane may be made of a monolithic material, e.g. a metallic material or a conductive ceramic and/or conducive organic material, or may be made of a structure covered or containing a conductive material, e.g. a conductive coating or track, e.g. an aluminium, iron and/or copper coating or track. The capsule comprises a storage 56 provided with a memory. In particular, the memory may be accessed in a read mode for getting access to stored information. In some embodiment, the memory may also be accessed in a write mode for writing information within the memory. For example, the memory may be configured to store information provided by a user. The memory may also be configured to store identification and/or production information, for instance serial numbers, production date, batch identifier, custom parameters, allowing a reader having access to this information to identify a type for this capsule and/or verify expiration data and/or customize the processing of said capsule. The storage 56 comprises a capsule communication interface adapted to allow an external arrangement to access the memory, more particularly to read and/or optionally write its content.

In a specific embodiment of the storage, the communication interface allows wireless communications. Typically, the storage 56 may be a RFID assembly having at least a read mode in which a memory can be read by an external RFID reader.

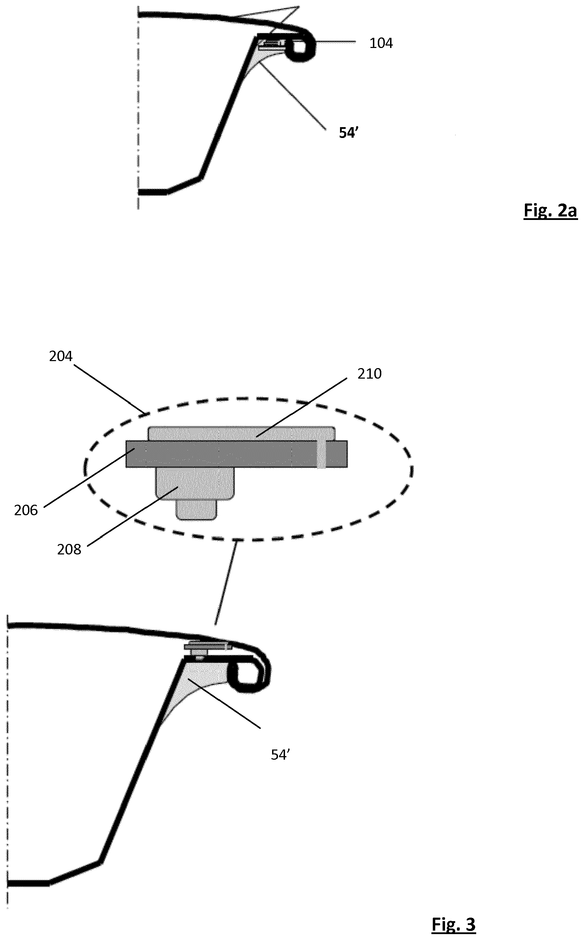

Referring to Figure 2a and 2b, there is shown therein an embodiment of a capsule embedding a RFID assembly 104. The RFID assembly 104 comprises a ring antenna 102 cooperating with an integrated circuit IC 106. The geometry of the ring antenna 102 is sensibly annular, and is adapted to be mounted on the bottom side of the rim of the capsule, i.e. on the opposite side of the rim which is in contact with the membrane as illustrated on figure 2a. The integrated circuit IC 106 comprises a first contact pad 108 and a second contact pad 110, the first and the second contact pads being disposed relatively to each other on opposite sides of the integrated circuit IC 106. In particular the contact pads are used to couple the integrated circuit IC 106 to the antenna 102. Typically, the contact pads are spaced apart of each other sensibly by 75 µm. The integrated circuit IC 106 is disposed into a support 112, typically a layer of polymer, for instance a layer of Polyethylene terephthalate PET, and covered by an insulation layer 114. The RFID assembly 104 is adapted to be mounted on the bottom side of the rim of the capsule, and be covered by the seal 54'. The RFID assembly 104 is adapted to be capacitively coupled to an RFID reader, in particular using an low frequency (LF) or an High Frequency (HF) RFID technology.

Since the RFID assembly 104 is placed inside the seal 54', and covered by a silicon sealant for example, contact with coffee or water are avoided, increasing the reliability of the RFID assembly 104. Moreover, the RFID assembly 104 is better protected for external aggressions, for example, mechanical deformations and pressure. Also, functionality of the RFID assembly 104 may be tested as soon as the RFID assembly is mounted on the body of the capsule and before filling and sealing the capsule.

Referring to Figure 3, there is shown therein another embodiment of a capsule embedding a RFID assembly 204. The RFID assembly 204 comprises an integrated circuit IC 206. The integrated circuit IC 206 comprises a first contact pad 208 and a second contact pad 210, the first and the second contact pads being disposed relatively to each other on opposite sides of the integrated circuit IC 206. Typically, the contact pads are spaced apart of each other sensibly by 75 µm. The integrated circuit IC 206 is disposed inside the capsule between the peripheral rim **54** of cup and the membrane 52 so as to couple the integrated circuit IC 206 the peripheral rim **54** and to the membrane 52. In this embodiment, the capsule body and the lid of the capsule are electrically isolated. The RFID assembly 204 is an inlayless solution, allowing great reduction of costs. The RFID assembly 204 is adapted to be capacitively coupled to an RFID reader, in particular using an low frequency (LF) RFID technology.

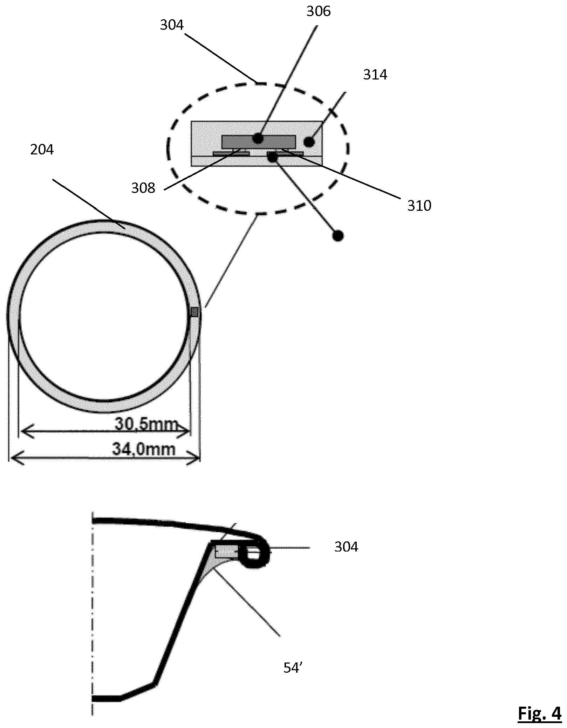

Referring to Figure 4, there is shown therein an embodiment of a capsule embedding a RFID assembly 304. The RFID assembly 304 comprises a ring antenna cooperating with an integrated circuit IC 306. The geometry of the ring antenna is sensibly annular, and is adapted to be mounted on the bottom side of the rim of the capsule, i.e. on the opposite side of the rim which is in contact with the membrane as illustrated on figure 2a.

The integrated circuit IC 306 comprises a first
contact pad 308 and a second contact pad 310, the first and the second contact pads being disposed relatively to each on the same side of the integrated circuit IC 306. In particular the contact pads are used to couple the integrated circuit IC 306 to the antenna. Typically, the contact pads are made of Gold. The integrated circuit IC 306 is disposed into a support 312, typically a layer of Aluminium (with a thickness of sensibly 10 µm for example) and a layer of polymer, for instance a layer of Polyethylene terephthalate PET (with a thickness of sensibly 50 µm for example). The integrated circuit IC 306 is covered by a spacing element 314 having a thickness of sensibly 300 µm for example. The integrated circuit IC 306 may be attached with a direct chip attachment assembly technology to the structured ring antenna. The RFID assembly 304 is adapted to be mounted on the bottom side of the rim of the capsule, and be covered by the seal 54'. The RFID assembly 304 is adapted to be capacitively coupled to an RFID reader, in particular using an Ultra High Frequency (UHF) near field RFID technology.

Since the RFID assembly 304 is placed inside the seal 54', and covered by a silicon sealant for example, contact with coffee or water are avoided, increasing the reliability of the RFID assembly 304. Moreover, the RFID assembly 304 is better protected for external aggressions, for example, mechanical deformations and pressure. Also, functionality of the RFID assembly 304 may be tested as soon as the RFID assembly is mounted on the body of the capsule and before filling and sealing the capsule.

## Claims

1. A capsule comprising: a cup-shaped body for containing a beverage ingredient, the body having a peripheral rim; and a covering membrane (52) assembled to the body at the rim, **characterized in that** the capsule further comprises a communication assembly (104, 304), said communication assembly comprising an integrated circuit (106, 306) coupled with a ring antenna (102, 302) being mounted on a rim portion (54) of the capsule, the communication assembly being adapted to transmit information related to the capsule to an external reader, wherein the antenna is arranged with the ring thereof extending entirely around the peripheral rim.

2. The capsule according to claim 1, wherein the capsule is provided with a seal (54') at its outer face, the communication assembly (104, 304) being disposed in the sealing member or between the sealing member and the outer face of the capsule.

3. The capsule according to any one of claims 1 to 2, wherein the integrated circuit (106) comprises a first contact pad (108) and a second contact pad (110), the first and the second contact pads being disposed relatively to each other on opposite sides of the integrated circuit (106), the contact pads being used to couple the integrated circuit (106) to the antenna (102).

4. The capsule according to claim 3, wherein the contact pads (108, 110) are spaced apart of each other sensibly by 75 µm.

5. The capsule according to any one of claims 3 to 4, wherein the integrated circuit (106) is disposed into a support (112) comprising a layer of polymer and covered by an insulation layer (114).

6. The capsule according to any one of claims 1 to 5, wherein the communication assembly (104) is adapted to be capacitively coupled to an external reader, using a low frequency (LF), an High Frequency (HF) or an Ultra High Frequency (UHF) communication technology.

7. A capsule comprising: a cup-shaped body for containing a beverage ingredient, the body having a peripheral rim; and a covering membrane (52) assembled to the body at the rim, **characterized in that** the capsule further comprises a communication assembly (204), said communication assembly comprising an integrated circuit (206), the integrated circuit (206) being disposed inside the capsule between a peripheral rim (54) and the covering membrane (52), the integrated circuit being arranged so as to be coupled to the peripheral rim (54) of a capsule and to the membrane (52).

8. The capsule according to claim 7, wherein the integrated circuit (206) comprises a first contact pad (208) and a second contact pad (210), the first and the second contact pads being disposed relatively to each other on opposite sides of the integrated circuit (206), the contact pads being used to couple the integrated circuit (206) to the peripheral rim (54) of a capsule and to the membrane (52).

9. The capsule according to claim 8, wherein the contact pads (208, 210) are spaced apart of each other sensibly by 75 µm.

10. The capsule according to claim 7, wherein the integrated circuit (206) is mounted on the inner surface of the capsule without using an inlay.

11. The capsule according to any one of claims 7 to 10, wherein the communication assembly (204) is adapted to be capacitively coupled to an external reader, using a low frequency (LF) communication technology.

12. The capsule according to any one of the preceding claims, wherein the communication assembly comprises a RFID interface.

13. The capsule according to any one of the preceding claims, wherein communication assembly (104, 204, 304) is adapted to provide information related to preferences of a user, said information comprising one or any combination of the following information: user's preferred volume of beverage to prepare with the capsule, user's preferred temperature of beverage to prepare with the capsule, user's preferred pressure used for preparing a beverage with the capsule, user's preferred recipe used for preparing a beverage with the capsule, user's preferred ingredients used for preparing a beverage with the capsule, user's preferred additional ingredients used for preparing a beverage with the capsule, user's preferred pre-wetting setup used for preparing a beverage with the capsule.

14. The capsule according to any one of the preceding claims, wherein communication assembly (104, 204, 304) is adapted to provide information related to the capsule, said information comprising one or any combination of the following information: unique identifier, type of capsule, date of production, batch number, type of ingredient included in the capsule, identifier, serial number.

15. A beverage preparation system comprising a capsule according to any of the preceding claims and a beverage preparation machine having an ingredient processing module for preparing a beverage with at least one ingredient supplied with said capsule, said machine comprising a reader (50) having a communication interface configured, when coupled with the communication assembly of the capsule, to read the information stored in the communication assembly.

## Patentansprüche

1. Kapsel, umfassend: einen becherförmigen Körper zur Aufnahme eines Getränkeinhaltsstoffs, wobei der Körper einen peripheren Rand aufweist; und eine Deckmembran (52), die am Rand an den Körper angebaut ist, **dadurch gekennzeichnet, dass** die Kapsel ferner eine Kommunikationsbaugruppe (104, 304) umfasst, wobei die Kommunikationsbaugruppe einen mit einer Ringantenne (102, 302) gekoppelten, integrierten Schaltkreis (106, 306) umfasst, der an einen Randabschnitt (54) der Kapsel angebaut ist, wobei die Kommunikationsbaugruppe dafür konzipiert ist, Informationen in Bezug auf die Kapsel an ein externes Lesegerät zu übermitteln, wobei die Antenne so angeordnet ist, dass ihr Ring vollständig um den peripheren Rand herum verläuft.

2. Kapsel nach Anspruch 1, wobei die Kapsel an ihrer äußeren Stirnseite mit einer Dichtung (54') versehen ist, wobei die Kommunikationsbaugruppe (104, 304) im Dichtelement oder zwischen dem Dichtelement und der äußeren Stirnseite der Kapsel angeordnet ist.

3. Kapsel nach einem der Ansprüche 1 bis 2, wobei der integrierte Schaltkreis (106) ein erstes Kontaktpad (108) und ein zweites Kontaktpad (110) umfasst, wobei das erste und das zweite Kontaktpad relativ zueinander an gegenüberliegenden Seiten des integrierten Schaltkreises (106) angeordnet sind, wobei die Kontaktpads dazu verwendet werden, den integrierten Schaltkreis (106) an die Antenne (102) zu koppeln.

4. Kapsel nach Anspruch 3, wobei die Kontaktpads (108, 110) sinnvollerweise in einem Abstand von 75 µm voneinander angeordnet sind.

5. Kapsel nach einem der Ansprüche 3 bis 4, wobei der integrierte Schaltkreis (106) in einer Halterung (112) angeordnet ist, die eine Polymerschicht umfasst und durch eine Isolierschicht (114) bedeckt ist.

6. Kapsel nach einem der Ansprüche 1 bis 5, wobei die Kommunikationsbaugruppe (104) dafür konzipiert ist, unter Verwendung einer Niederfrequenz-Kommunikationstechnologie (LF-Kommunikationstechnologie), einer Hochfrequenz-Kommunikationstechnologie (HF-Kommunikationstechnologie) oder einer Ultrahochfrequenz-Kommunikationstechnologie (UHF-Kommunikationstechnologie) kapazitiv an ein externes Lesegerät gekoppelt zu werden.

7. Kapsel, umfassend: einen becherförmigen Körper zur Aufnahme eines Getränkeinhaltsstoffs, wobei der Körper einen peripheren Rand aufweist; und eine Deckmembran (52), die am Rand an den Körper angebaut ist, **dadurch gekennzeichnet, dass** die Kapsel ferner eine Kommunikationsbaugruppe (204) umfasst, wobei die Kommunikationsbaugruppe einen integrierten Schaltkreis (206) umfasst, wobei der integrierte Schaltkreis (206) im Inneren der Kapsel zwischen einem peripheren Rand (54) und der Deckmembran (52) angeordnet ist, wobei der integrierte Schaltkreis dazu angeordnet ist, an den peripheren Rand (54) einer Kapsel und an die Membran (52) gekoppelt zu werden.

8. Kapsel nach Anspruch 7, wobei der integrierte Schaltkreis (206) ein erstes Kontaktpad (208) und ein zweites Kontaktpad (210) umfasst, wobei das erste und das zweite Kontaktpad relativ zueinander an gegenüberliegenden Seiten des integrierten Schaltkreises (206) angeordnet sind, wobei die Kontaktpads dazu verwendet werden, den integrierten Schaltkreis (206) an den peripheren Rand (54) einer Kapsel und an die Membran (52) zu koppeln.

9. Kapsel nach Anspruch 8, wobei die Kontaktpads (208, 210) sinnvollerweise in einem Abstand von 75 µm voneinander angeordnet sind.

10. Kapsel nach Anspruch 7, wobei der integrierte Schaltkreis (206) an der Innenseite der Kapsel ohne Verwendung einer Einlage angebaut ist.

11. Kapsel nach einem der Ansprüche 7 bis 10, wobei die Kommunikationsbaugruppe (204) dafür konzipiert ist, unter Verwendung einer Niederfrequenz-Kommunikationstechnologie (LF-Kommunikationstechnologie) kapazitiv an ein externes Lesegerät gekoppelt zu werden.

12. Kapsel nach einem der vorstehenden Ansprüche, wobei die Kommunikationsbaugruppe eine RFID-Schnittstelle umfasst.

13. Kapsel nach einem der vorstehenden Ansprüche, wobei die Kommunikationsbaugruppe (104, 204, 304) dafür konzipiert ist, Informationen in Bezug auf Präferenzen eines Benutzers zu liefern, wobei die Informationen eine oder jede beliebige Kombination der folgenden Informationen umfassen: das vom Benutzer bevorzugte Volumen des mit der Kapsel zuzubereitenden Getränks, die vom Benutzer bevorzugte Temperatur des mit der Kapsel zuzubereitenden Getränks, den vom Benutzer bevorzugten, zum Zubereiten des Getränks mit der Kapsel verwendeten Druck, das vom Benutzer bevorzugte, zum Zubereiten eines Getränks mit der Kapsel verwendete Rezept, die vom Benutzer bevorzugten, zum Zubereiten eines Getränks mit der Kapsel verwendeten Inhaltsstoffe, die vom Benutzer bevorzugten, zum Zubereiten eines Getränks mit der Kapsel verwendeten, zusätzlichen Inhaltsstoffe, die vom Benutzer bevorzugte, zum Zubereiten eines Getränks mit der Kapsel verwendete Vorbrüheinstellung.

14. Kapsel nach einem der vorstehenden Ansprüche, wobei die Kommunikationsbaugruppe (104, 204, 304) dafür konzipiert ist, Informationen in Bezug auf die Kapsel zu liefern, wobei die Informationen eine oder jede beliebige Kombination der folgenden Informationen umfassen: eindeutige Kennung, Kapseltyp, Herstellungsdatum, Chargennummer, Typ des in der Kapsel enthaltenen Inhaltsstoffs, Kennung, Seriennummer.

15. Getränkezubereitungssystem, umfassend eine Kapsel nach einem der vorstehenden Ansprüche und Getränkezubereitungsmaschine mit einem Inhaltsstoffverarbeitungsmodul zum Zubereiten eines Getränks mit mindestens einem durch die Kapsel zugeführten Inhaltsstoff, wobei die Maschine ein Lesegerät (50) mit einer Kommunikationsschnittstelle umfasst, das dazu konfiguriert ist, die in der Kommunikationsbaugruppe gespeicherten Informationen zu lesen, wenn es an die Kommunikationsbaugruppe der Kapsel gekoppelt ist.

## Revendications

1. Capsule comprenant : un corps en forme de godet destiné à contenir un ingrédient pour boisson, le corps ayant un rebord périphérique ; et une membrane de recouvrement (52) assemblée au corps au niveau du rebord, **caractérisée en ce que** la capsule comprend en outre un ensemble de communication (104, 304), ledit ensemble de communication comprenant un circuit intégré (106, 306) couplé une antenne circulaire (102, 302) étant montée sur une partie de rebord (54) de la capsule, l'ensemble de communication étant apte à transmettre des informations relatives à la capsule à un lecteur externe, dans laquelle l'antenne est disposée avec son élément circulaire s'étendant entièrement autour du rebord périphérique.

2. Capsule selon la revendication 1, dans laquelle la capsule est dotée d'un joint (54') au niveau de sa face externe, l'ensemble de communication (104, 304) étant disposé dans l'élément d'étanchéité ou entre l'élément d'étanchéité et la face externe de la capsule.

3. Capsule selon l'une quelconque des revendications 1 à 2, dans laquelle le circuit intégré (106) comprend une première pastille de contact (108) et une seconde pastille de contact (110), les première et seconde pastilles de contact étant disposées l'une par rapport à l'autre sur des côtés opposés du circuit intégré (106), les pastilles de contact étant utilisées pour coupler le circuit intégré (106) à l'antenne (102).

4. Capsule selon la revendication 3, dans laquelle les pastilles de contact (108, 110) sont espacées l'une de l'autre sensiblement de 75 µm.

5. Capsule selon l'une quelconque des revendications 3 à 4, dans laquelle le circuit intégré (106) est disposé dans un support (112) comprenant une couche de polymère et recouvert par une couche d'isolation (114).

6. Capsule selon l'une quelconque des revendications 1 à 5, dans laquelle l'ensemble de communication (104) est apte à être couplé par voie capacitive à un lecteur externe, à l'aide d'une technologie de communication basse fréquence (LF), haute fréquence (HF) ou ultra-haute fréquence (UHF).

7. Capsule comprenant : un corps en forme de godet destiné à contenir un ingrédient pour boisson, le corps ayant un rebord périphérique ; et une membrane de recouvrement (52) assemblée sur le corps au niveau du rebord, **caractérisée en ce que** la capsule comprend en outre un ensemble de communication (204), ledit ensemble de communication comprenant un circuit intégré (206), le circuit intégré (206) étant disposé à l'intérieur de la capsule entre un rebord périphérique (54) et la membrane de recouvrement (52), le circuit intégré étant disposé de manière à être couplé au rebord périphérique (54) d'une capsule et à la membrane (52).

8. Capsule selon la revendication 7, dans laquelle le circuit intégré (206) comprend une première pastille de contact (208) et une seconde pastille de contact (210), les première et seconde pastilles de contact étant disposées l'une par rapport à l'autre sur des côtés opposés du circuit intégré (206), les pastilles de contact étant utilisées pour coupler le circuit intégré (206) au rebord périphérique (54) d'une capsule et à la membrane (52).

9. Capsule selon la revendication 8, dans laquelle les pastilles de contact (208, 210) sont espacées l'une de l'autre sensiblement de 75 µm.

10. Capsule selon la revendication 7, dans laquelle le circuit intégré (206) est monté sur la surface interne de la capsule sans utiliser d'incrustation.

11. Capsule selon l'une quelconque des revendications 7 à 10, dans laquelle l'ensemble de communication (204) est apte à être couplé de manière capacitive à un lecteur externe, à l'aide d'une technologie de communication basse fréquence (LF).

12. Capsule selon l'une quelconque des revendications précédentes, dans laquelle l'ensemble de communication comprend une interface RFID.

13. Capsule selon l'une quelconque des revendications précédentes, dans laquelle l'ensemble de communication (104, 204, 304) est apte à fournir des informations relatives aux préférences d'un utilisateur, lesdites informations comprenant une information ou toute combinaison des informations suivantes : le volume préféré de l'utilisateur de la boisson à préparer avec la capsule, la température préférée de l'utilisateur de la boisson à préparer avec la capsule, la pression préférée de l'utilisateur utilisée pour préparer une boisson avec la capsule, la recette préférée de l'utilisateur utilisée pour préparer une boisson avec la capsule, les ingrédients préférés de l'utilisateur utilisés pour préparer une boisson avec la capsule, les ingrédients supplémentaires préférés de l'utilisateur utilisés pour préparer une boisson avec la capsule, le réglage de pré-humidification préféré de l'utilisateur utilisé pour préparer une boisson avec la capsule.

14. Capsule selon l'une quelconque des revendications précédentes, dans laquelle l'ensemble de communication (104, 204, 304) est apte à fournir des informations relatives à la capsule, lesdites informations comprenant une information ou toute combinaison des informations suivantes : un identifiant unique, le type de capsule, la date de production, le numéro de lot, le type d'ingrédient compris dans la capsule, un identifiant, le numéro de série.

15. Système de préparation de boisson comprenant une capsule selon l'une quelconque des revendications précédentes et une machine de préparation de boisson ayant un module de traitement d'ingrédient pour préparer une boisson avec au moins un ingrédient fourni par ladite capsule, ladite machine comprenant un lecteur (50) ayant une interface de communication conçue, lorsqu'elle est couplée à l'ensemble de communication de la capsule, pour lire les informations mémorisées dans l'ensemble de communication.
